# EUROPEAN PATENT APPLICATION

(11) **EP 4 796 444 A1**
(43) Date of publication of application: **26.08.2026**
(21) Application number: 26157897.5
(22) Date of filing: 11.02.2026
(51) Int. Cl.: B64D 37/04, F02C 9/40

(54) **AIRCRAFT FUEL DOSING**

(30) Priority: 24.02.2025 GB 202502608
(71) Applicant: Airbus Operations Ltd, Filton, Bristol BS34 7 (GB)
(72) Inventor: EDWARDS, Henry, Bristol, BS34 7PA (GB)
(74) Representative: Worthington, Richard Easton

(57) **Abstract**

An aircraft (1) with a first tank (20) suitable for containing fuel, a second tank (30) suitable for containing a second, different fuel or fuel additive, a first fuel line (22) configured to transport the fuel from the first tank to a mixer (50), a pump (62) arrangement configured to drive a flow of fuel from the first tank along the first fuel line and a second fuel line (32) configured to transport the second, different fuel or fuel additive from the second tank to the mixer. The mixer is configured to mix the fuel and second, different fuel or fuel additive to form a blended fuel. The aircraft also includes a mixer line (52) configured to transport the blended fuel from the mixer to a combustor (40).

## Description

### FIELD OF THE INVENTION

The present invention relates to an aircraft and an associated method of blending fuel in an aircraft.

### BACKGROUND OF THE INVENTION

Aircraft fuel can be "dosed" with fuel additives prior to flight for several different reasons, such as enhancing fuel performance or improving the efficiency of the aircraft. The volume of fuel additive that is added to the fuel may also change depending on several factors, such as the flight route of the aircraft (to account for environmental changes and conditions) and the age of the aircraft (for maintenance purposes).

Fuel additives may be pre-mixed into the fuel from a refinery before being introduced into the aircraft. While this ensures a consistent and controlled second, different fuel, it does not allow for customisation or adjustment of the additive volume prior to the aircraft's flight.

Alternatively, the fuel additives may be "manually dosed" at the aircraft by maintenance personnel. However, this process is susceptible to errors, as it relies heavily on the accuracy and precision of the personnel involved.

There is therefore a desire for an improved method of dosing aircraft fuel in an aircraft.

### SUMMARY OF THE INVENTION

A first aspect of the invention provides an aircraft comprising: a first tank suitable for containing fuel; a second tank suitable for containing a second, different fuel or fuel additive; a first fuel line configured to transport the fuel from the first tank to a mixer; a pump arrangement configured to drive a flow of fuel from the first tank along the first fuel line; a second fuel line configured to transport the second, different fuel or fuel additive from the second tank to the mixer; the mixer, wherein the mixer is configured to mix the fuel and second, different fuel or fuel additive to form a blended fuel; and a mixer line configured to transport the blended fuel from the mixer to a combustor.

Optionally, the blended fuel is directly fed from the mixer to the combustor and not via a further tank.

Optionally, the mixer is outside the first tank and the second tank.

Optionally, the aircraft further comprises at least one non-return valve arranged on the first fuel line and/or the second fuel line to prevent a return of the blended fuel from the mixer to the first tank and/or the second tank.

Optionally, the mixer comprises: a first inlet for receiving a flow of fuel from the first fuel line; a second inlet for receiving a flow of second, different fuel or fuel additive from the second fuel line; an outlet configured to deliver the blended fuel to the mixer line; a chamber fluidically connecting the first inlet, the second inlet and the outlet; and wherein, the mixer further comprises a pressure reduction feature that, in use, creates a region of reduced pressure within the chamber so that liquid is drawn into the chamber via the second inlet as a result of the reduced pressure.

Optionally, the pressure reduction feature is a venturi device.

Optionally, the chamber has a first diameter and the venturi device comprises a throat region within the chamber, wherein the throat region has a reduced diameter compared to the first diameter.

Optionally, the second inlet is arranged at the throat region of the mixer.

Optionally, a flow rate of the first fuel through the first fuel line is greater than a flow rate of the second fuel or fuel additive through the second fuel line, and optionally, wherein a diameter of the first fuel line is larger than a diameter of the second fuel line.

Optionally, the second fuel line further comprises a control valve that is openable and closable to control the flow of second, different fuel or fuel additive from the second fuel line to the mixer.

Optionally, the aircraft further comprises a sensor, wherein the sensor is arranged to measure one or more parameters of the fuel from the first fuel line, and optionally, wherein the one or more parameters comprise a flow rate of fuel from the first fuel line.

Optionally, the control valve is in electronic communication with the sensor so that the control valve is arranged to open or close in response to the one or more parameters of the first fuel exceeding a threshold.

Optionally, the aircraft further comprises an environmental sensor arranged to measure one or more environmental parameters relating to an external environment of the aircraft, wherein the control valve is in electronic communication with the environmental sensor so that the control valve is arranged to open or close in response to one or more environmental parameters exceeding a threshold.

Optionally, the one or more parameters include one or more of: aircraft altitude, temperature, atmospheric pressure or humidity.

Optionally, the aircraft further comprises a control system in electronic communication with the control valve and/or sensor and/or environmental sensor, wherein the control system is configured to automatically control the flow of second, different fuel or fuel additive in the second fuel line based on one or more of: (a) a flight phase of the aircraft, (b) a measurement of the flow sensor exceeding a threshold, and/or (c) a measurement of the environmental sensor exceeding a threshold.

Optionally, the aircraft further comprises: a third tank suitable for containing a third, different fuel to the first fuel and the second fuel, or second fuel additive, and a third fuel line that is configured to transport the third fuel or second fuel additive to the mixer, wherein the mixer is further configured to mix the first fuel, the second fuel or fuel additive and the third fuel or second fuel additive to form the blended fuel.

Optionally, the mixer further comprises a third inlet for fluidically connecting to the third fuel line.

Optionally, the aircraft further comprises a valve arrangement comprising a first valve on the second inlet and a second valve on the third inlet, wherein the valve arrangement is selectively operable to open and close the first and/or second valve.

Optionally, the valve arrangement further comprises a first injector and a second injector, wherein the valve arrangement is operable to inject the second, different fuel or fuel additive from the second fuel line through the first injector into the mixer or inject the third, different fuel or second fuel additive from the third fuel line through the second injector into the mixer.

Optionally, the first fuel, the second fuel or fuel additive and a/the third fuel or second fuel additive are kept separate on the aircraft and do not mix before the mixer.

Optionally, the mixer is upstream of the combustor, and optionally, upstream of a low pressure shut-off valve.

Optionally, wherein the combustor is an engine or an APU.

Optionally, the second, different fuel is one of a kerosene-based, a synthetic or sustainable aviation fuel.

Optionally, the fuel additive may be any one of a liquid, a suspended powder in liquid, a solvent, a surfactant, a gaseous mixture, dissolved mixtures in aviation fuel or any combination of the above.

A further aspect of the invention provides a method of blending fuel on an aircraft, providing a fuel in a first fuel line between a first tank and a mixer; providing a second, different fuel or fuel additive in a second fuel line between a second tank and a mixer; driving fuel along the first fuel line using a pump arrangement; mixing the fuel and second, different fuel or fuel additive in the mixer to form a blended fuel; and providing the blended fuel to a combustor along a mixer line.

### BRIEF DESCRIPTION OF THE DRAWINGS

Embodiments of the invention will now be described with reference to the accompanying drawings, in which:
Figure 1 shows a plan view of an aircraft;
Figure 2 shows a schematic drawings of an exemplary fuel delivery system;
Figure 3 shows another schematic drawing of an exemplary fuel delivery system;
Figure 4 shows another schematic drawing of an exemplary fuel delivery system;
Figure 5 shows another schematic drawing of an exemplary fuel delivery system; and
Figures 6 shows another schematic drawing of an exemplary fuel delivery system.

### DETAILED DESCRIPTION OF EMBODIMENT(S)

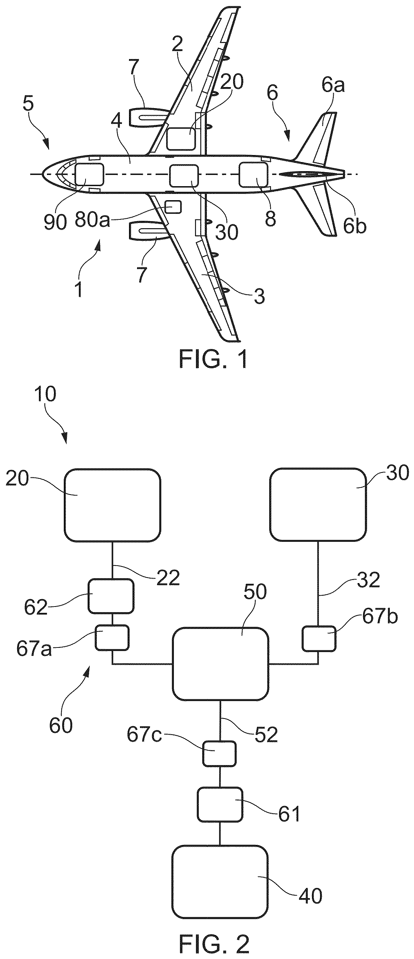

An aircraft 1 shown in Figure 1 comprises a pair of wings 2,3 extending from a fuselage 4 and a nose end 5 and a tail end 6 including horizontal and vertical stabilising surfaces 6a, 6b. The aircraft 1 is a typical jet passenger transonic transport aircraft but the invention is applicable to a wide variety of fixed wing aircraft types, including commercial, military, passenger, cargo, jet propeller, general aviation etc. with any number of wings attached to the fuselage.

The aircraft 1 includes a fuel delivery system 10 with at least one first tank 20 and at least one second tank 30. In the exemplary aircraft 1 shown in Figure 1, the first tank 20 is in the wing 2,3 of the aircraft 1, while the second tank 30 is located within the fuselage 4 of the aircraft 1. The first tank 20 in this example is a fuel tank, and the second tank is a storage tank 30. While only one first tank 20 and one second tank 30 is shown in Figure 1, it will be understood that the aircraft 1 may have any number and/or arrangement of first tank(s) 20 and second tank(s) 30.

The first tank 20 is suitable for containing and storing aircraft fuel, such as synthetic fuels, sustainable aviation fuels or kerosene-based fuels, such as Jet A1. Similarly, the second tank 30 is suitable for containing and storing a second, different fuel or a fuel additive. The second, different fuel and fuel additive may be a liquid that has a different chemical structure to the aircraft fuel stored in the first tank 20. For example, the second, different fuel may be sustainable aviation fuel (SAF) that has a lower-carbon count than Jet A1, may include blends of biofuel or any other suitable second, different fuel that differs from the fuel in the first tank 20. Similarly, the fuel additive may be biocides, metal deactivators, lubricity enhancers, detergents, solvents, emission control additives, or anti-static additives, or any other suitable fuel additive composition. These may be provided as a liquid, a suspended powder in liquid, a solvent, a surfactant, a gaseous mixture, dissolved mixtures in aviation fuel or any combination of the above.

The first fuel is loaded into the first tank 20 before the aircraft 1 takes off. Similarly, the second, different fuel or fuel additive in the second tank 30 is loaded and stored in the second tank 30 before the aircraft 1 takes off. The fuel delivery system 10 is arranged to mix the fuel and the second, different fuel/fuel additive together before it is fed to a combustor 40. This is known as "dosing" the fuel contained in the first tank 20 using the contents of the second tank 30 (i.e. the second, different fuel or fuel additive).

A schematic representation of the fuel delivery system 10 is shown in Figure 2. The fuel delivery system 10 delivers fuel from the first tank 20 and the second, different fuel or fuel additive from the second tank 30 to a combustor 40 on the aircraft 1. The fuel delivery system 10 "doses" the fuel before it arrives to the combustor 40 with the second, different fuel/fuel additive by using a mixer 50 and a pump arrangement 60, as will be described in further detail below. The combustor 40 may be the wing-mounted engines 7 or the auxiliary power unit (APU) 8, which in this example, is in the fuselage 4.

The fuel delivery system 10 delivers fuel from the first tank 20 to the mixer 50 through a first fuel line 22. The first fuel line 22 may be any suitable conduit that is configured to transport the fuel contained in the first tank 20 to the mixer 50. The first tank 20 is therefore in fluid communication with the mixer 50 through the first fuel line 22. The fuel may be delivered to the mixer 50 by creating a pressure difference between the first tank 20 and the mixer 50. For example, pressurised air may be fed into the first tank 20 to create a region of locally high pressure relative to ambient conditions. A transfer valve (not shown) on the first tank 20 is then opened. This allows fuel to be released, and the internal tank pressure pushes fuel from the first tank 20 and down the first fuel line 22 towards the mixer 50. In other examples, a fuel tank vent valve (not shown) may be opened to ambient air while the aircraft 1 is on the ground. The valve may then be closed for take-off and during the flight. As the aircraft 1 increases in altitude, the external ambient pressure decreases relative to the first tank 20 and the pressure differential pushes the fuel from the first tank 20 down the first fuel line 22 towards the mixer.

In other examples, as illustrated in Figure 2, the fuel is delivered to the mixer 50 by being pumped upstream using a pump arrangement 60, which includes a pump 62 that is arranged on the first fuel line 22. The pump 62 may be any suitable pump arrangement, such as centrifugal pump or jet pump. The pump 62 creates a positive flow of fuel from the first tank 20 along the first fuel line 22 and to the mixer 50. The pump 62 therefore prevents the backflow of fuel from the mixer 50 back to the first tank 20. The flow of fuel along the first fuel line 22 is therefore an "active" flow, i.e. it is driven by the pump 62. In this example, the external force is a pump, but it can be any suitable mechanical device.

The fuel delivery system 10 also includes at least one non-return valve 67a. In the example shown in Figure 2, the fuel delivery system 10 has a first non-return valve 67a on the first fuel line 22 and a second non-return valve 67b on the second fuel line 32. The first non-return valve 67a is arranged upstream of the mixer 50 and is arranged to prevent the backflow of the first fuel along the first fuel line 22 to the first tank 20 This may occur when the pump arrangement 60 is not active, for example, when the aircraft 1 is deactivated or de-powered (e.g. by means of a switch). Similarly, the second non-return valve 67b is arranged upstream of the mixer 50 on the second fuel line 32 and is arranged to prevent the backflow of the second, different fuel or fuel additive along the second fuel line 32 back to the second tank 30.

The fuel delivery system 10 also delivers the second, different fuel/fuel additive from the second tank 30 to the mixer 50 through a second fuel line 32. The second fuel line 32 may be any suitable conduit that allows the second, different fuel/fuel additive contained in the second tank 30 to be transported to the mixer 50. The second fuel line 32 may also have an "active" flow (e.g. by use of valve or pump as part of the pump arrangement 60) to transport the second, different fuel/fuel additive in the second tank 30 to the mixer 50. However, in this example, the second fuel line 32 has a passive flow from the second tank 30 to the mixer 50. As will be described in more detail below, the backflow of the second, different fuel/fuel additive along the second fuel line 32 is prevented due to the second non-return valve 67b.

The mixer 50 is arranged to receive and mix the fuel from the first fuel line 22 with the second, different fuel/fuel additive from the second fuel line 32 to form a blended fuel. The mixer 50 is positioned outside the first tank 20 and the second tank 30. The mixer 50 may therefore be any suitable arrangement that is able to receive and mix the fuel from the first tank 20 with the second, different fuel/fuel additive from the second tank 30 together. For example, the mixer 50 may be a centrifugal pump, an agitator, a static mixer or a venturi device. As shown in Figure 2, the mixer 50 is upstream of a low pressure shut-off valve 61 and the combustor 40. The low pressure shut-off valve 61 may be located at the fuel tank boundary of the aircraft 1.

The blended fuel is then fed from the mixer 50 to the combustor 40 through a mixer line 52. The mixer line 52 may be any suitable conduit that is arranged to transport the blended fuel from the mixer 50 to the combustor 40. The blended fuel is driven towards the combustor 40 because the fuel is driven into the mixer 50 using the pump arrangement 60. The pump 62 therefore drives the blended fuel to the combustor 40. As shown, the blended fuel is directly fed from the mixer 50 to the combustor 40 and does not pass through any further tank(s). The blended fuel in the mixer 50 does not flow back towards the first tank 20 or the second tank 30 because of the first and second non-return valves 67a, 67b. This prevents the blended fuel from mixing (and contaminating) the fuel supply from the first tank 20 and/or the second, different fuel supply or fuel additive supply from the second tank 30. The fuel delivery system 10 may also further include a third non-return valve 67c located downstream of the mixer 50 on the mixer line 52 (but upstream of the low-pressure shut-off valve 61). The third non-return valve 67c is arranged to prevent the flow of the blended fuel from the mixer line 52 from returning to the mixer 50. As described in more detail below, the flow of the second, different fuel or fuel additive is changeable depending on the requirements of the aircraft 1 and so the composition of the blended fuel may constantly change depending on the requirements of the aircraft 1. Therefore, the third non-return valve 67c helps prevent any contamination of the blended fuel in the mixer 50 with the blended fuel already in the mixer line 52. While only three exemplary non-return valves 67a-c are described in relation to Figure 2, it will be understood that the fuel delivery system 10 may include any number of non-return valves.

The fuel delivery system 10 therefore has a separate first fuel line 22, a separate second fuel line 32 and a separate mixer line 52 that each act as dedicated conduits for the fuel, second, different fuel/fuel additive and blended fuel, respectively. The fuel delivery system 10 therefore avoids any cross-mixing of the fuel and second, different fuel/fuel additive before the mixer 50. The first fuel, the second fuel or fuel additive are therefore kept separate on the aircraft 1 and do not mix before meeting at the mixer 50. This is also true for any additional fuels or fuel additives that may be used with the mixer 50.

As described above, backflow of the fuel in the first fuel line 22 and of the blended fuel in the mixer line 52 is prevented by the first and third non-return valves 67a, 67c. Backflow of the second, different fuel/fuel additive along the second fuel line 32 is also prevented due to the second non-return valve 67b. The fuel delivery system 10 therefore has an overall unidirectional flow of fuel from the first tank 20 and second, different fuel/fuel additive from the second tank 30 to the combustor 40. This arrangement ensures a consistent supply of the blended fuel (from the mixer 50) to the combustor, which helps maintain consistent engine performance and improves fuel efficiency.

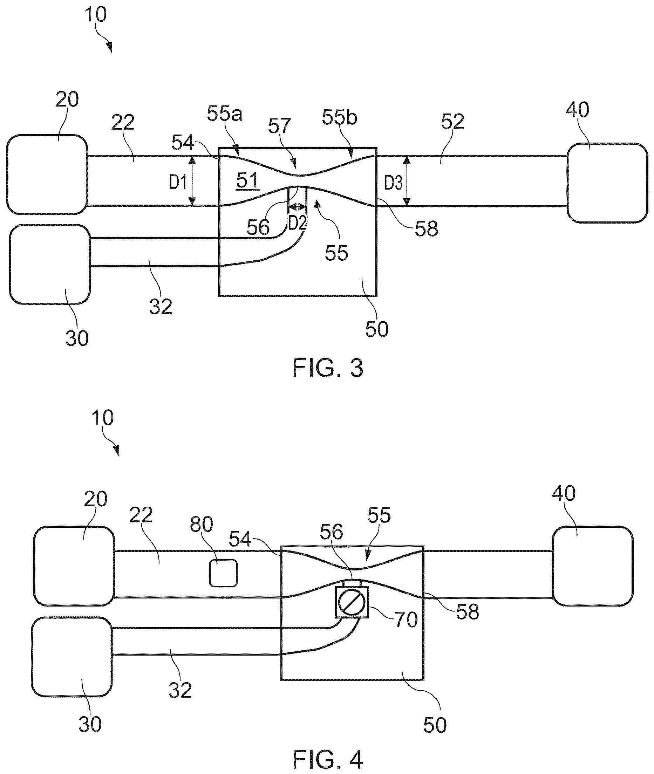

An exemplary mixer 50 is shown in Figure 3. The mixer 50 has a first inlet 54 that is in fluid communication with the first fuel line 22, a second inlet 56 that is in fluid communication with the second fuel line 32 and an outlet 58 that is in fluid communication with the mixer line 52. The mixer 50 also has a chamber 51 positioned in between the first inlet 54, the second inlet 56 and the outlet 58. The mixer 50 therefore has a flow path between the first inlet 54, the second inlet 56 and the outlet 58.

As shown, in this example, the first inlet 54 has a diameter D1 that corresponds to a diameter of the first fuel line 22. In this example, the second inlet 56 has a diameter D2 that is smaller than a diameter of the second fuel line 32. The outlet 58 has a diameter D3 that corresponds to a diameter of the mixer line 52. In this example, the diameter of the first fuel line 22 is larger than the diameter of the second fuel line 32.

This is because a larger volume of fuel is required to be delivered to the combustor 40, while a relatively smaller volume of second, different fuel/fuel additive from the second tank 30 is required to dose the fuel. The larger diameter of the first fuel line 22 also helps accommodate a larger active flow of the first fuel in the first fuel line 22. The diameter D3 of the outlet corresponds to the diameter D1 of the first inlet 54 and the diameter D2 of the second inlet 56. This is to ensure that the outlet diameter D3 is large enough to accommodate the flow of fuel from the first fuel line 22 and the second fuel line 32. This ensures that the outlet diameter D3 can accommodate a large volume of blended fuel (that corresponds to the volume of fuel entering the mixer 50 from the first fuel line 22 and the second, different fuel/fuel additive entering the mixer 50 from the second fuel line 32) is delivered to the combustor 40. This arrangement also allows the combustor 40 to receive a continuous flow of fuel from the first tank 20.

The mixer 50 also includes a pressure reduction feature 55 within the chamber 51. The pressure reduction feature 55 is configured to create a local velocity increase within the chamber 51, which results in a pressure reduction that is able to draw in the second, different fuel/fuel additive from the second fuel line 32. As described in more detail below, the local velocity increase helps to mix the fuel from the first fuel line 22 and the second, different fuel/fuel additive from the second fuel line 32. In the example shown in Figures 3 to 6, the pressure reduction feature 55 is a venturi device. However, it will be understood that any arrangement of pressure reduction feature 55 may be employed in the mixer 50 (i.e. any arrangement that would alter the pressure along the flow path from the first inlet 54, second inlet 56 and the outlet 58), such as orifice plates, control valves or flow restrictors.

The pressure reduction feature 55 has substantially similar pressures at the first inlet 54 and the outlet 58 because the diameter of the outlet 58 is substantially similar to the diameter of the first inlet 54. As shown, the pressure reduction feature 55 includes a converging section 55a that extends from the first inlet 54 to a throat section 57 of the pressure reduction feature 55. As shown, the converging section 55a has a cross-sectional area that gradually decreases towards the throat 57. The throat has a smaller diameter than the first inlet 54 and the outlet 58. The pressure reduction feature 55 also has a diverging section 55b that extends from the throat 57 to the outlet 58. The diverging section 55b has a cross-sectional area that gradually increases from the throat 57 to the outlet 58.

With this arrangement, the fluid velocity of the fuel from the first fuel line 22 increases as it approaches the throat 57. Simultaneously, the pressure of the fuel from the first fuel line 22 decreases as it approaches the throat 57. The throat 57 therefore defines a region of low pressure within the chamber 51 of the mixer 50. The cross-sectional area of the pressure reduction feature 55 increases in the cross-sectional area towards the outlet, which causes the fluid velocity of the flow path to decrease and the pressure to increase towards the outlet 58 of the mixer 50. The flow path through the mixer 50 therefore has a region of low pressure at the throat 57, and two regions of higher pressure at the first inlet 54 and the outlet 58.

As shown, the second inlet 56 is arranged at the throat 57 of the mixer 50. Therefore, the second fuel line 32 is in fluid communication with the region of the mixer 50 with reduced pressure (along the flow path of the mixer 50). The second, different fuel/fuel additive in the second fuel line 32 is therefore drawn into the chamber 51 of the mixer 50 because of the difference in pressure at the second fuel line 32 and the throat 57 at the second inlet 56. As the second, different fuel/fuel additive is drawn into the mixer 50, the backflow of the second, different fuel/fuel additive is prevented along the second fuel line 32 by the second non-return valve 67b. As the first fuel defines an active motive flow through the chamber 51 of the mixer, the second, different fuel/fuel additive is mixed with the fuel as it passes through the mixer 50 to form a blended fuel in the diverging section 55b and the mixer line 52.

This arrangement provides a passive mixing solution that requires no active mechanical components to mix (i.e. dose) the fuel from the first fuel line 22 with the second, different fuel/fuel additive from the second fuel line 32. The mixer 50 shown in Figure 3 therefore provides an easy and robust dosing arrangement. Furthermore, the volume of second, different fuel/fuel additive that is used to "dose" the fuel from the first fuel line 22 may be customised by changing the diameter of the second inlet 56. Similarly, the flow rate of fuel along the first fuel line 22 may be altered by customising the operation of the pump 62 to affect how much second, different fuel/fuel additive is introduced through the second inlet 56. For example, a higher fuel flow rate of the first fuel will create a larger drop in pressure at the throat 57 of the mixer 50, which will draw in a larger volume of second, different fuel/fuel additive from the second fuel line 32. This system is therefore easy to control as there is no requirement for intelligent control or metering of the dose. Instead, the system may be controlled by altering the flow of fuel along the first fuel line 22 (i.e. the motive flow).

Another exemplary mixer 50 is shown in Figure 4. The mixer 50 is substantially identical to the mixer 50 shown in Figure 3, so corresponding reference numerals are used for identical features. The description of the identical features will not be repeated for brevity. As shown, the mixer 50 further includes a control valve 70 arranged on the second fuel line 32. The control valve 70 is operable to move between an open and closed position. In the open position, the second, different fuel/fuel additive from the second fuel line 32 is free to flow through the second inlet 56 and into the mixer 50. In the closed position, the second, different fuel/fuel additive from the second fuel line 32 is prevented from flowing through the second inlet 56 and into the mixer 50. The control valve 70 can therefore be selectively opened and closed depending on the volume of the second, different fuel or fuel additive required to dose the first fuel. This may vary depending on several factors, such as the flow rate of fuel along the first fuel line 22 or flight of the aircraft 1.

The control valve 70 helps control the volume of second, different fuel/fuel additive entering the mixer 50. The control valve 70 also helps prevent backflow of the blended fuel from the mixer 50 into the second fuel line 32, which may occur in periods when the flow of fuel along the first fuel line 22 experiences pressure or flow perturbation under normal or abnormal (failure) conditions for short periods. The control valve 70 may be configured to receive electronic signals to control the open/close state of the control valve 70, as described below.

The fuel delivery system 10 may further include a sensor 80. In the example shown in Figure 4, the sensor 80 is positioned upstream of the mixer 50, in the first fuel line 22. However, it will be understood that the sensor 80 may be positioned in any suitable position along the fuel delivery system 10, such as within the chamber 51 of the mixer 50, in the throat 57 of the pressure reduction feature 55, or in the mixer line 52. The sensor 80 may be any suitable sensor, such as a pressure sensor, density, viscosity, electrical conductivity, energy content, optical sensor, a flowrate sensor or temperature sensor. In the example shown in Figure 4, the sensor 80 is a flow rate sensor that is configured to monitor the flow rate of the fuel in the first fuel line 22. In this arrangement, the sensor 80 measures the flow rate of the fuel in the first fuel line 22 towards the mixer 50.

The sensor 80 may be in electronic communication with the control valve 70. In this example, the sensor 80 is configured to determine whether the measured flow rate in the first fuel line 22 exceeds a threshold flow rate and send a signal to the control valve 70. The threshold flow rate may be determined by several factors, such as the density of the fuel, the temperature, the diameter of the first fuel line 22. The control valve 70 may open or close in response to the signal received from the sensor 80. For example, the control valve 70 may be arranged to open the control valve if the measured flow rate drops below the threshold so as to selectively "dose" the fuel in the first fuel line 22 depending on the flow of fuel. This may be required when it is desirable for the operator of the aircraft 1, for example when second fuel or second fuel additive is not required, or exhaustion of one or more fuels.

In other examples, the sensor 80 may be an environmental sensor 80a that is arranged to measure one or more environmental parameters relating to an external environment of the aircraft 1. The environmental sensor 80a may be positioned anywhere on the aircraft 1, such as the fuselage 4, or the wings 2,3 as shown in Figure 1. The environmental sensor 80a may be a temperature sensor, an atmospheric pressure sensor, a humidity sensor or an altitude sensor. As with the sensor 80 described in relation to Figure 4, the environmental sensor 80 may also be in electronic communication with the control valve 70 so that control valve 70 opens and closes in response to the measured environmental parameter exceeding or dropping below a threshold value. The control valve 70 may therefore open or close in response to the signal received from the sensor 80a. In this arrangement, the control valve 70 is operable to selectively "dose" the fuel in the first fuel line 22 depending on the external environment of the aircraft 1. This may be particularly advantageous where the second, different fuel/fuel additive in the second tank 30 the likelihood of ice forming in the fuel. Ice is more likely to form in the fuel at certain altitudes. Similarly, the second, different fuel/fuel additive may reduce the likelihood of contrail formation. Contrails have a higher likelihood of forming at higher altitudes. The fuel delivery system 10 can therefore selectively "dose" the fuel in real-time and in response to external factors of the aircraft 1.

In other examples, the control valve 70 may be in electronic communication with a control system 90 of the aircraft 1. The control system 90 of the aircraft 1 controls the electronic systems of the aircraft and has an interface in the cockpit that allows the pilot or other personnel to control and review various electronic systems within the aircraft 1. The control system 90 therefore contains and receives information relating to the operation of the aircraft 1. The control system 90 may therefore work independently or in conjunction with the sensors 80, 80a to control the operation of the control valve 70. For example, the control system 90 may receive data from the sensors 80, 80a and control the operation of the control valve 70 based on the data received from the sensors. This allows the operation of the control valve 70 to be centralised and overseen by personnel in the cockpit. In other examples, the control system 90 may be arranged to record data provided from the control valve 70 and/or the sensors 80, 80a. The control system 90 may therefore be able to record information such as the volume of second, different fuel/fuel additive used and/or when the second, different fuel/fuel additive was used. This data may be recorded by the control system 90 for several reasons, such as to demonstrate compliance of the aircraft 1 to local/regional standards or to inform future flights of the aircraft 1, e.g. the volume of the second, different fuel/fuel additive required for flights taken along the same flight path.

In other examples, the control system 90 may control operation of the control valve 70 based on other data contained within the control system 90, such as the flight phase of the aircraft. For example, if the second, different fuel/fuel additive was a local air quality improving additive, the control valve 70 may only be opened during taxi, take-off and initial climb. The control valve 70 could then be shut off for the rest of the flight. Equally, the second, different fuel/fuel additive may also be employed to improve the local air quality of the airport. In this example, the control valve 70 may open during descent, approach, landing and taxi back to the gate or terminal. The control valve 70 may therefore be selectively operated to "dose" the fuel at specific times of flight or flight phase of the aircraft 1, allowing the fuel to be dosed in real time and in response to various requirements of the aircraft 1. The second, different fuel/fuel additive supply can therefore be tailored and matched to the aircraft 1 operating conditions.

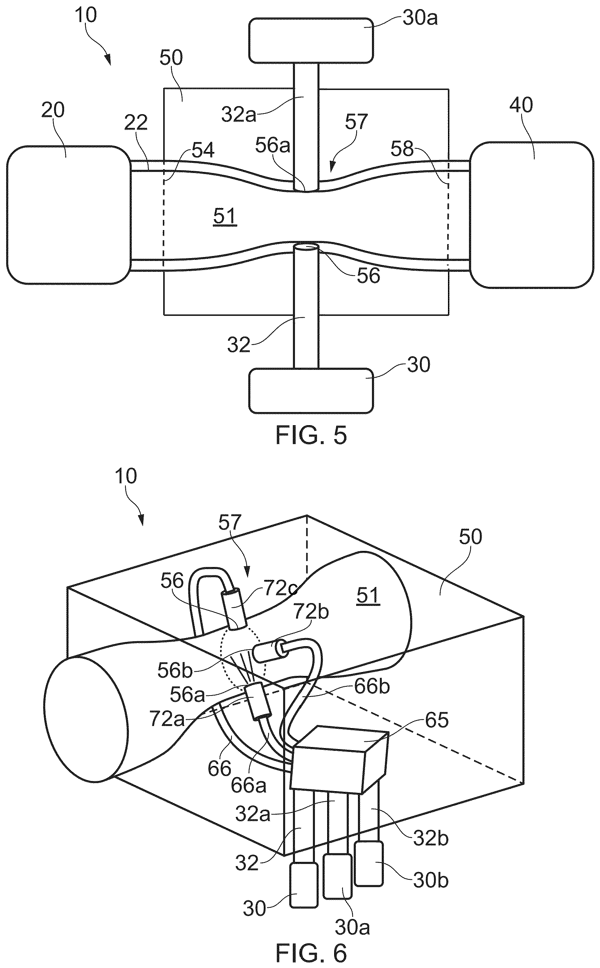

Another exemplary fuel delivery system 10 is shown in Figure 5. Several components of the fuel delivery system 10 shown in Figure 5 is identical to the fuel deliver system shown in Figures 1 to 4, so corresponding reference numerals are used for identical features. The description of the identical features will not be repeated for brevity.

As shown, the fuel delivery system 10 includes a further third tank 30a. The third tank 30a is substantially identical to the second tank 30 described in Figures 1 to 4. The third tank 30a is also suitable for containing and storing a third, different fuel or a second fuel additive. Preferably, the third, different fuel/fuel additive in the third tank 30a is different to the first fuel and the second, different fuel or fuel additive contained in the second tank 30. This allows the aircraft 1 to hold two different fuels and/or fuel additives that may be selectively introduced into the mixer 50 depending on the requirements of the aircraft 1.

The third tank 30a delivers the third different fuel or second fuel additive to the mixer 50 through a third fuel line 32a in a substantially identical manner to the second tank 30 and the second fuel line 32. The mixer 50 in this arrangement has a third inlet 56a that allows the third tank line 32 to be in fluid communication with the mixer 50. The third inlet 56a is arranged on the throat 57 of the mixer 50. The third, different fuel or second fuel additive is therefore introduced into the mixer 50 in a substantially identical way to the second, different fuel or fuel additive from the second fuel line 32. As shown schematically in Figure 5, the second inlet 56 and the third inlet 56a are positioned diametrically opposite each other. The second inlet 56 and the third inlet 56a are therefore positioned across from each other at the throat 57 of the mixer 50. This allows uniform mixing of the second, different fuel/fuel additive and the third, different fuel or second fuel additive with the fuel flow. As described above, the throat 57 creates a region of low pressure in the mixer 50, which draws the contents of the second fuel line 32 and the third fuel line 32a into the mixer 50 through the second inlet 56 and the third inlet 56a. In other examples, the second inlet 56 and third inlet 56a may be staggered or offset from each other in relation to the throat 57 of the mixer 50 to prevent significant flow disturbance through the mixer 50. In such arrangements, the throat 57 of the mixer 50 may be elongated to ensure that the second inlet 56 and the third inlet 56a are still positioned at the throat 57 of the mixer 50 while being offset relative to each other.

Although not illustrated in Figure 5, it will be understood that the flow of the third, different fuel/second fuel additive in the third fuel line 32a may be controlled by a second control valve (not shown). The first control valve 70 and the second control valve may be openable and closable in response to the same signals (i.e. from the same sensor 80/environmental sensor 80a/control system 90) or may be openable and closable in response to different signals. In other examples, the first control valve 70 and the second control valve may operate inversely to the same signal. For example, the first control valve 70 may open in response to a signal from the sensor 80, while the second control valve may close in response to the same signal from the sensor 80. This ensures maximum efficiency of the blended fuel that is delivered to the combustor 40 depending on the flight phase of the aircraft 1.

Figure 6 shows a perspective schematic view of another arrangement of an exemplary fuel delivery system 10. In this example, the mixer 50 is provided as a venturi device, similar to the devices shown in Figures 3 to 5. As shown, the fuel delivery system 10 has a second tank 30, a third tank 30a and a fourth tank 30b with a fourth tank line 32b. The second fuel line 32, the third tank line 32a and the fourth tank line 32b are fed into a valved manifold 65. The valved manifold 65 is arranged to selectively permit the different fuel/fuel additives from the first, second and third tanks 30, 30a, 30b into the mixer chamber 51 through respective conduits 66, 66a, 66b.

The valved manifold may be positioned at any point along the length of the tank lines 32, 32a, 32b or may be positioned within the mixer 50 as shown in Figure 6. The valved manifold 65 replaces any need for having individual valves or hardware to valve and control each of the tank lines 32, 32a, 32b. The valved manifold may include any suitable valve arrangement, such as internal ball valves, to allow for accurate dosing of the supplied fuels/additives. For example, the valves may be selectively actuated for each tank line to create a customised blended fuel in the mixer 50 that is to be supplied to the combustor 40.

The valved manifold 65 may control the opening and closing of respective valves (thereby allowing or restricting the flow of different fuel/fuel additives into the mixer chamber 51) through an electronic signal. As described above with relation to control valve 70, the valved manifold 65 may be operable to selectively open and close respective valves for each tank line 32, 32a, 32b depending on the electronic signal received from a sensor 80, and/or an environmental sensor 80a and/or the flight control system 90.

Once the respective valves for each second fuel line 32, 32a, 32b is opened, the respective fuel/fuel additives may enter the mixer chamber 51 through respective conduits 66, 66b, 66c that define inlets 56, 56a, 56b in the throat 57 of the mixer 50. Optionally, the inlets 56, 56a, 56b may further include injectors 72a, 72b, 72c that are configured to inject the contents of the respective second fuel lines 32, 32a, 32b, with a higher pressure into the flow path of the fuel in the first fuel line 22. The injectors 72a, 72b, 72c ensure that there is no backflow of the different fuel/fuel additive from the inlets 56, 56a, 56b to the valved manifold 65. In other examples, the tank lines 32, 32a, 32b may further include a pump to increase the flow rate of different fuel/fuel additive along each line and overcome any losses.

An exemplary method of blending fuel aboard the aircraft will be described. First, a fuel delivery system 10 as described above is provided. The first fuel is fed along the first fuel line 22 towards the mixer 50. This is pumped towards the mixer 50 with the pump arrangement 60. Similarly, the second, different fuel/fuel additive is provided along the second fuel line 32 towards the mixer 50. It will be understood that the first fuel and the second, different fuel/fuel additive may be provided to the mixer 50 simultaneously or may be provided at different times. The second, different fuel/fuel additive is mixed in with the fuel in the mixer 50 to form a blended composition. In the example where the mixer 50 is a venturi device, the flow from the second fuel line 32 is brought into the mixer 50 due to the pressure change. The blended fuel from the mixer 50 is provided to the combustor 40 along the mixer line 52. Optionally, the flow of the second, different fuel/fuel additive may be controlled by a control valve 70 that receives electronic signals from a sensor 80, an environmental sensor 80a or the flight control system 90. If the information received by the control valve 70 exceeds a threshold T, then the control valve may be operated to open and allow the second, different fuel/fuel additive to enter the mixer 50. If the information received by the control valve 70 does not exceed a threshold T, then the control valve 70 may remain closed to stop dosing the fuel and the second, different fuel/fuel additive remains in the storage first fuel line 32. In other examples, the electronic signal may operate in reverse (i.e. the control valve 70 closes when the threshold is exceeded).

The fuel delivery system 10 described therefore allows the aircraft 1 to create and use customised blended fuel on board the aircraft 1. The blended fuel can therefore be provided to the combustor 40 as required. This improves the efficiency of the combustor 40. Furthermore, this arrangement prevents the backflow of fuel along the first fuel line 22, the second, different fuel/fuel additive along the second fuel line 32 and the blended fuel along the mixer line 52. This arrangement therefore allows the blended fuel to be created with minimal or no cross-contamination and to be delivered consistently to the combustor 40.

Where the word 'or' appears this is to be construed to mean 'and/or' such that items referred to are not necessarily mutually exclusive and may be used in any appropriate combination.

Although the invention has been described above with reference to one or more preferred embodiments, it will be appreciated that various changes or modifications may be made without departing from the scope of the invention as defined in the appended claims.

## Claims

1. An aircraft comprising:
a first tank suitable for containing a first fuel;
a second tank suitable for containing a second, different fuel or fuel additive;
a first fuel line configured to transport the fuel from the first tank to a mixer;
a pump arrangement configured to drive a flow of fuel from the first tank along the first fuel line;
a second fuel line configured to transport the second, different fuel or fuel additive from the second tank to the mixer;
the mixer, wherein the mixer is configured to mix the first fuel and second fuel or fuel additive to form a blended fuel; and
a mixer line configured to transport the blended fuel from the mixer to a combustor.

2. An aircraft according to claim 1, wherein the blended fuel is directly fed from the mixer to the combustor and not via a further tank.

3. An aircraft according to claim 1 or 2, wherein the mixer is outside the first tank and the second tank.

4. An aircraft according to any preceding claim, further comprising at least one non-return valve arranged on the first fuel line and/or the second fuel line to prevent a return of the blended fuel from the mixer to the first tank and/or the second tank.

5. An aircraft according to any preceding claim, wherein the mixer comprises:
a first inlet for receiving a flow of the first fuel from the first fuel line;
a second inlet for receiving a flow of the second, different fuel or fuel additive from the second fuel line;
an outlet configured to deliver the blended fuel to the mixer line;
a chamber fluidically connecting the first inlet, the second inlet and the outlet; and
wherein, the mixer further comprises a pressure reduction feature that, in use, creates a region of reduced pressure within the chamber so that liquid is drawn into the chamber via the second inlet as a result of the reduced pressure.

6. An aircraft according to claim 5, wherein the pressure reduction feature is a venturi device; preferably
wherein the chamber has a first diameter, and the venturi device comprises a throat region within the chamber, wherein the throat region has a reduced diameter compared to the first diameter; and preferably
wherein the second inlet is arranged at the throat region of the mixer.

7. An aircraft according to any preceding claim, wherein a flow rate of the first fuel through the first fuel line is greater than a flow rate of the second fuel or fuel additive through the second fuel line, and optionally, wherein a diameter of the first fuel line is larger than a diameter of the second fuel line; and/or
wherein the second fuel line further comprises a control valve that is openable and closable to control the flow of the second fuel or fuel additive from the second fuel line to the mixer.

8. An aircraft according to any preceding claim, further comprising a sensor, wherein the sensor is arranged to measure one or more parameters of the fuel from the first fuel line, and optionally, wherein the one or more parameters comprise a flow rate of the first fuel from the first fuel line.

9. An aircraft according to claim 8 when dependent on claim 7, wherein the control valve is in electronic communication with the sensor so that the control valve is arranged to open or close in response to the one or more parameters of the first fuel exceeding a threshold;
preferably further comprising an environmental sensor arranged to measure one or more environmental parameters relating to an external environment of the aircraft, wherein the control valve is in electronic communication with the environmental sensor so that the control valve is arranged to open or close in response to one or more environmental parameters exceeding a threshold;
preferably wherein the one or more parameters include one or more of: aircraft altitude, temperature, atmospheric pressure or humidity.

10. An aircraft according to any one of claims 7 to 9, wherein the aircraft further comprises a control system in electronic communication with the control valve and/or sensor and/or environmental sensor, wherein the control system is configured to automatically control the flow of the second fuel or fuel additive in the second fuel line based on one or more of: (a) a flight phase of the aircraft, (b) a measurement of the flow sensor exceeding a threshold, and/or (c) a measurement of the environmental sensor exceeding a threshold.

11. An aircraft according to any preceding claim, wherein the aircraft further comprises:
a third tank suitable for containing a third, different fuel to the first fuel and the second fuel, or second fuel additive, and
a third fuel line that is configured to transport the third fuel or second fuel additive to the mixer,
wherein the mixer is further configured to mix the first fuel, the second fuel or fuel additive and the third fuel or second fuel additive to form the blended fuel.

12. An aircraft according to claim 11 when dependent on claim 5, wherein the mixer further comprises a third inlet for fluidically connecting to the third fuel line.

13. An aircraft according to claim 11 or 12, wherein the aircraft further comprises a valve arrangement comprising a first valve on the second inlet and a second valve on the third inlet, wherein the valve arrangement is selectively operable to open and close the first and/or second valve;
preferably wherein the valve arrangement further comprises a first injector and a second injector, wherein the valve arrangement is operable to inject the second fuel or fuel additive from the second fuel line through the first injector into the mixer or inject the third fuel or second fuel additive from the third fuel line through the second injector into the mixer.

14. An aircraft according to any preceding claim wherein the first fuel, the second fuel or fuel additive and a/the third fuel or second fuel additive are kept separate on the aircraft and do not mix before the mixer; and/or
wherein the mixer is upstream of the combustor, and optionally, upstream of a low pressure shut-off valve; and/or
wherein the combustor is an engine or an APU; and/or
wherein the second, different fuel is one of a kerosene-based, a synthetic or sustainable aviation fuel; and/or
wherein the fuel additive may be any one of a liquid, a suspended powder in liquid, a solvent, a surfactant, a gaseous mixture, dissolved mixtures in aviation fuel or any combination of the above.

15. A method of blending fuel on an aircraft according to any preceding claim, the method comprising:
providing a fuel in a first fuel line between a first tank and a mixer;
providing a second, different fuel or fuel additive in a second fuel line between a second tank and a mixer;
driving fuel along the first fuel line using a pump arrangement;
mixing the fuel and second, different fuel or fuel additive in the mixer to form a blended fuel; and
providing the blended fuel to a combustor along a mixer line.
